Europäisches Patentamt

(19) European Patent Office

Office européen des brevets

(11) Veröffentlichungsnummer: **0 071 237**
**B1**

(12) **EUROPÄISCHE PATENTSCHRIFT**

(45) Veröffentlichungstag der Patentschrift:
08.05.85

(51) Int. Cl.⁴: **B 60 R 9/12**

(21) Anmeldenummer: **82106759.2**

(22) Anmeldetag: **27.07.82**

(54) Kraftfahrzeug-Dachträger.

(30) Priorität: **30.07.81 DE 3130204**

(43) Veröffentlichungstag der Anmeldung:
**09.02.83 Patentblatt 83/6**

(45) Bekanntmachung des Hinweises auf die Patenterteilung:
**08.05.85 Patentblatt 85/19**

(84) Benannte Vertragsstaaten:
**AT CH FR IT LI**

(56) Entgegenhaltungen:
**DD - A - 154 683**
**DE - B - 2 426 419**
**US - A - 3 719 297**

(73) Patentinhaber: **Heinrich Wunder GmbH & Co. KG,
Münchener Strasse 80 Postfach 1920, D-8060 Dachau
(DE)**

(72) Erfinder: **Zoor, Reinhold, Hohenzollernplatz 1,
D-8000 München 40 (DE)**

(74) Vertreter: **Zmyj, Erwin, Dipl.-Ing., Postfach 95 04 28,
D-8000 München 95 (DE)**

**Beschreibung**

Die Erfindung bezieht sich auf einen Dachträger mit einem das Transportgut, z. B. Ski, aufnehmenden Tragteil und einem das Transportgut übergreifenden schwenkbaren Schließteil, der mit seinem freien Ende an einer Rastvorrichtung einrastbar ist, die eine durch eine Feder belastete Rastfalle aufweist, die als schwenkbar gelagerter Rasthebel ausgebildet und durch ein Schloß in der Raststellung verriegelbar ist.

Bei einem bekannten Kraftfahrzeug-Dachträger dieser Art (US-A-3 719 297) ist der Rasthebel mit dem angeformten Rasthaken am Schließteil angelenkt und wirkt mit einer Rastfalle zusammen, die im Tragteil des Dachträgers vorgesehen ist. Diese Rastfalle ist als Drehgriff ausgebildet und im Tragteil gelagert. Innerhalb des Tragteiles weist dieser Drehgriff eine Ausnehmung auf, in die der Rasthebel mit seinem Rasthaken eingreift. Bei dieser bekannten Ausführungsform ist also nicht nur eine schwenkbare Lagerung des Rasthebels sondern auch eine drehbare Lagerung des Betätigungsgriffes notwendig, der die Ausnehmung für die Aufnahme des Rasthakens aufweist. Dies stellt nicht nur einen erhöhten konstruktiven Aufwand dar, sondern kann auch bei ungünstigen Witterungsbedingungen zu Störungen bei der Bedienung führen. Da es sich hier um einen Skiträger handelt muß er auch bei ungünstigen Witterungsbedingungen bedienbar sein. Bei Einwirkung von Feuchtigkeit und niedrigen Temperaturen kann jedoch eine Vereisung des Drehgriffes eintreten, wodurch dieser sich nur noch schwer drehen läßt, insbesondere dann, wenn der Griff außerhalb des Tragteiles durch Vereisung glatt geworden ist.

Aufgabe der Erfindung ist es, nicht nur den Bedienungskomfort zu erhöhen, sondern gleichzeitig auch die konstruktive Ausgestaltung zu vereinfachen.

Diese Aufgabe wird ausgehend von einem Kraftfahrzeug-Dachträger der eingangs erläuterten Art erfindungsgemäß dadurch gelöst, das der Rasthebel am Tragteil gelagert ist und in der Schließstellung mit einem Rasthaken durch eine Öffnung des Schließteiles greift und an diesem einhakbar ist und daß der Rasthaken an einen verdickten Kopf des Rasthebels ausgebildet ist, mit dem der Rasthebel in der Schließstellung durch die Öffnung greift und der zur Druckbetätigung des Rasthebels beim Öffnen des Schließteils dient.

Durch diese Ausgestaltung, bei der der Rasthebel unmittelbar am Schließteil eingehakt ist und direkt durch den Benutzer bedienbar ist, wobei dieser auf den verdickten Kopf des Rasthebels beim Öffnen des Schließteils drückt, ist eine zusätzliche Vorrichtung zum Auslösen des Rasthakens nicht erforderlich, wodurch nicht nur der konstruktive Aufwand verringert sondern auch der Bedienungskomfort erhöht wird, da es auch bei ungünstigen Witterungsbedingungen einfacher ist einen Rasthebel durch Druck auf seinen Kopf zu betätigen, als einen Drehgriff zu verdrehen, insbesondere wenn diese Teile vereist sind. Außerdem kann auch bei einer Vereisung die Funktionsfähigkeit nicht beeinträchtigt werden, da eine möglicherweise vorhandene Eisschicht durch die Druckbetätigung leichter zerstört werden kann, als eine Eisschicht in der Lagerung des Drehgriffes.

Wenn die Rastfläche entsprechend Anspruch 2 ausgebildet ist, so ist hierdurch eine gewisse Sperrwirkung gegeben, da beim Verschwenken des Rasthebels aufgrund der Neigung der Rastfläche am Rasthaken der Schließteil etwas in Schließrichtung bewegt wird, was jedoch sehr gering ist und nur zur Sicherung der Rastverbindung dient. Selbstverständlich kann die Rastfläche auch so ausgebildet sein, daß dieser zusätzliche Widerstand nicht auftritt. Hierzu genügt es, wenn die Rastfläche eine Krümmung aufweist, die mit dem Schwenkradius des Rasthakens zusammenfällt.

Durch die Ausgestaltungen gemäß den Unteransprüchen 4 und 5 wird eine besonders einfache Montage des Skiträgerteils am Tragteil ermöglicht. Mittels der Klemmschraube kann, falls nur das Gehäuse entsprechend Anspruch 4 vorgesehen ist, dieses am Tragteil festgelegt und gegenüber dem Schließteil eingestellt werden. Für den Fall der Ausgestaltung entsprechend dem Unteranspruch 5 ist eine Einstellung nicht notwendig, weil das Gehäuse mit dem Rasthebel über das Verbindungsstück mit dem Lagerbock verbunden ist, so daß hieraus sich die exakte Stellung des Schließteiles gegenüber dem Rasthebel aus der Fertigung dieses Skiträgerteils ergibt. Bei dieser Ausgestaltung dient die Klemmschraube dazu den gesamten Skiträgerteil, der sich aus dem Gehäuse mit dem Rasthebel dem Verbindungsstück, dem Lagerbock und dem Schließteil zusammensetzt, am Trägerteil nach dem Einschieben dieses Skiträgerteils festzulegen. Dies ist insbesondere bei Universalträgern sehr erwünscht, wenn beispielsweise der Skiträgerteil gegen andere Halterungen wie z. B. spezielle Halterungen für Bootskörper oder Fahrräder ausgetauscht werden soll.

Weitere vorteilhafte Ausgestaltungen der Erfindung ergeben sich aus den Unteransprüchen in Verbindung mit der Beschreibung und der Zeichnung in der die Erfindung beispielsweise dargestellt ist. In dieser zeigt

Fig. 1 beide Enden eines Skiträgerteils, wobei der Mittelteil ausgespart ist, das auf einem Tragteil (1) festgelegt ist, welches in üblicher Weise mit nicht dargestellten Stützfüßen an den Dachrinnen eines Kraftfahrzeuges festlegbar ist; und

Fig. 2 einen Teilschnitt nach der Linie II-II in Fig. 1.

Das Skiträgerteil umfaßt ein Gehäuse 2, in welchem ein Rasthebel 3 um eine Schwenkachse 4 schwenkbar gelagert und durch eine Feder 5 belastet ist, sowie einen Lagerbock 27 für ein Schließteil 10, an welchem eine Schließkappe 11 festgelegt ist, die mit dem Rasthebel 3 zusammenwirkt. Der Lagerbock 27 ist mit dem Gehäuse 2 über ein Verbindungsstück 26 einstückig verbunden.

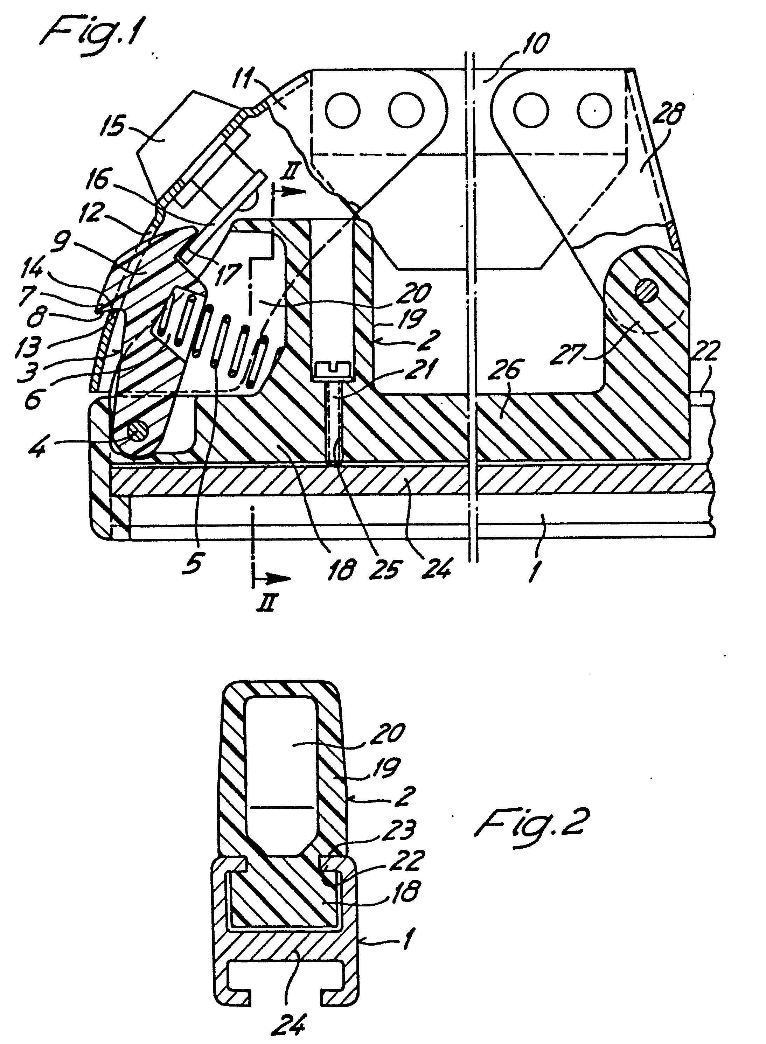

Das zur Sicherung der auf dem Verbindungsstück 26 abgelegten Lasten, z. B. Ski, dienende Schließteil 10 ist an dem Lagerbock 27 mittels einer Lagerstütze 28 schwenkbar gelagert. An dem anderen, freien Ende dient die schalenartige Schließkappe 11 zur Verrastung des Schließteils 10 und weist zu diesem Zweck eine Öffnung 12 auf, in welche in der Schließstellung der Rasthebel 3 mit seinem verdickten und als Drucktaste ausgebildeten Kopf 9 eingreift. Am unteren Ende dieses Kopfes ist ein Rasthaken 7 ausgebildet, dessen Rastfläche 8 mit dem unteren Rand 13 der Öffnung 12 der Schließkappe 11 zusammenwirkt. Der Rasthaken 7 ist durch die Feder 5 belastet, die einerseits am Gehäuse 2 und andererseits in einer Ausnehmung 6 des Rasthebels 3 abgestützt ist. Diese Feder 5 hält den Rasthaken 7, wie dies aus Fig. 1 hervorgeht, in seiner Schließstellung die durch Druck auf den als Drucktaste ausgebildeten Kopf 9 gelöst werden kann, wobei die Drucktaste soweit gegen die Wirkung der Feder 5 gedrückt werden muß, bis die Rastfläche 8 des Rasthakens 7 von dem unteren Rand 13 der Öffnung 12 der Schließkappe 11 freikommt.

Die Rastfläche 8 weist eine Neigung auf, die mit der Verbindungslinie von dem Berührungspunkt 14 zwischen Rastfläche 8 und dem unteren Rad 13 der Öffnung 12 mit der Schwenkachse 4 einen Winkel einschließt, der kleiner als 90° ist, d. h. beim Eindrücken der Drucktaste 9 des Rasthebels 3 wird die Schließkappe 11 etwas in Richtung ihrer Schließbewegung gezogen, wodurch ein gewisser Widerstand beim Lösen der Rastverbindung vorhanden ist.

Die Schließkappe 11 trägt ein Schloß 15, das mit seinem Schließriegel 16 hinter eine Ausnehmung 17 des Rasthebels 3 in der Schließstellung greift, wodurch der Rasthebel nicht mehr nach innen gedrückt werden kann, so daß die Rastverbindung gesichert und das Schließteil gegen ein Abheben bzw. Öffnen gesperrt ist.

Damit in der Offenstellung der Rasthebel 3 durch die Feder 5 nicht zu weit weggedrückt wird, ist er in seiner Schwenkbewegung, bei welcher der Kopf bzw. die Drucktaste 9 durch eine Öffnung 20 im Oberteil 19 des Gehäuses 2 hindurchragt, durch das in das Tragteil 1 eingeschobene Unterteil 18 des Gehäuses 2 abgestützt. Die Öffnung 20 läßt den Kopf 9 so weit hindurchtreten, daß die Schließkappe 11 mit dem Rasthaken 7 zusammenwirken kann. In der Schließstellung ist das Gehäuse 2 nahezu vollständig von der schalenartigen Schließkappe 11 überdeckt.

Um den Skiträgerteil am Tragteil festlegen zu können, ist dieser als Hohlprofil ausgebildet und weist im wesentlichen quadratischen Querschnitt auf. An seiner Oberseite ist der Tragteil 1 mit einer schlitzartigen Öffnung versehen, so daß zwei nach innen ragende Wandstege 22 verbleiben, die mit entsprechenden Seitennuten 23 zusammenwirken, die sich ausgehend vom Unterteil 18 des Gehäuses 2 über das Verbindungsstück 26 bis zum Lagerbock 27 erstrecken, so daß dieser aus Gehäuse 2, Verbindungsstück 6 und Lagerbock 7 bestehende Unterteil des Skiträgerteils in den hohlen Tragteil 1 eingeschoben und dadurch formschlüssig in diesem gehalten ist. Zur Festlegung dieses Skiträgerteils dient eine Schraube 21, die mit einem Quersteg 24 des hohlen Tragteiles 1 zusammenwirkt. Die Schraube 21 sitzt dabei in einem Gewinde 25 im Unterteil 18 des Gehäuses 2.

**Patentansprüche**

1. Kraftfahrzeug-Dachträger mit einem das Transportgut, z. B. Ski, aufnehmenden Tragteil (1) und einem das Transportgut übergreifenden schwenkbaren Schließteil (10, 11), der mit seinem freien Ende an einer Rastvorrichtung einrastbar ist, die eine durch eine Feder (5) belastete Rastfalle aufweist, die als schwenkbar gelagerter Rasthebel (3) ausgebildet und durch ein Schloß (15) in der Raststellung verriegelbar ist, dadurch gekennzeichnet, daß der Rasthebel (3) am Tragteil (1) gelagert ist und in der Schließstellung mit einem Rasthaken (7) durch eine Öffnung (12) des Schließteils (10, 11) greift und an diesen einhakbar ist und daß der Rasthaken (7) an einem verdickten Kopf des Rasthebels ausgebildet ist, mit dem der Rasthebel (3) in der Schließstellung durch die Öffnung (12) greift und der zur Druckbetätigung des Rasthebels (3) beim Öffnen des Schließteils (10, 11) dient.

2. Kraftfahrzeug-Dachträger nach Anspruch 1, dadurch gekennzeichnet, daß die Rastfläche (8) des Rasthakens (7) eine Krümmung aufweist, die stärker als diejenige der Bewegungsbahn der Rastfläche (8) um die Schwenkachse (4) des Rasthebels (3) ist oder daß bei geradflächiger Ausbildung die Rastfläche (8) mit der Verbindungslinie von Berührungspunkt (14) der Rastfläche (8) mit dem Schließteil (10, 11) und der Schwenkachse (4) des Rasthebels (3) einen Winkel einschließt, der kleiner als 90° ist.

3. Kraftfahrzeug-Dachträger nach Anspruch 1 oder 2, dadurch gekennzeichnet, daß der Rasthebel (3) in einem am Tragteil (1) angeordneten Gehäuse (2) schwenkbar gelagert ist, aus dem er mit seinem Kopf (9) herausragt und daß das Gehäuse (2) die den Rasthebel (3) belastende Feder (5) aufnimmt.

4. Kraftfahrzeug-Dachträger nach Anspruch 3, dadurch gekennzeichnet, daß der Tragteil (1) als ein mit einer oberen schlitzartigen Ausnehmung versehenes Holzprofil ausgebildet ist, in das das Gehäuse formschlüssig einschiebbar und mittels einer Klemmschraube (21) festklemmbar ist.

5. Kraftfahrzeug-Dachträger nach einem der Ansprüche 1 bis 4, dadurch gekennzeichnet, daß das den Rasthebel (3) aufnehmende Gehäuse (2) an seinem Unterteil (18) über ein Verbindungsstück (26) mit einem Lagerbock (27) für das Schließteil (10, 11) verbunden ist, wobei das Verbindungsstück (26) und der Lagerbock (27) ebenfalls wie das Gehäuse (2) formschlüssig in dem Tragteil (1) nach dem Einschieben gehalten sind.

6. Kraftfahrzeug-Dachträger nach einem der Ansprüche 1 bis 5, dadurch gekennzeichnet, daß der Schließteil (10, 11) im Bereich der den Rasthaken (3) aufnehmenden Öffnung (12) als schalenartige Kappe (11) ausgebildet ist und in der Schließstellung das den Rasthebel (3) aufnehmende Gehäuse (2) zumindest teilweise übergreift.

7. Kraftfahrzeug-Dachträger nach einem der Ansprüche 1 bis 6, dadurch gekennzeichnet, daß die schalenartige Kappe (11) am Ende des Schließteils (10, 11) ein Schloß (15) trägt, das in der Schließstellung mit seinem Riegel (16) den Rasthebel (3) gegen ein Verschwenken sperrt.

## Claims

1. A motor vehicle roof rack comprising a carrying part (1) for receiving the material to be transported, such as skis, and a pivoted closing part (10), 11), overriding the material to be transported which at its free end is adapted to be releasably locked by a detend mechanism, which comprises a detent latch, which is biased by a spring (5) and consists of a pivoted detent lever (3) and is adapted to be locked in latching position by a lock (15), characterized in that the detent lever (3) is pivoted on the carrying part (1) and has a detent hook (7) which in the closed position extends through an opening (12) of the closing part (10, 11) and is adapted to be hooked to the same, the detent hook (7) is formed on a thickened head of the detent lever, and said head extends through the opening (12) in the closed position and is adapted to be used to actuate the detent lever (3) by pressure when the closing part (10, 11) is to be opened.

2. A motor vehicle roof carrier according to claim 1, characterized in that the engaging surface (8) of the detent hook (7) has a stronger curvature than the path of movement of the detent surface (8) around the pivotal axis (4) of the detent lever (3) or that in case of a flat engaging surface (8) the latter includes an angle that is smaller than 90° with the line which connects the point of contact (14) between the engaging surface (8) and the closing part (10, 11) to the pivotal axis (4) of the detent lever (3).

3. A motor vehicle roof rack according to claim 1 or 2, characterized in that the detent lever (3) is pivoted in a housing (2), which is mounted on the carrying part, the head (9) of the detent lever protrudes from said housing, and the housing (2) accommodates the spring (5) which biases the detent lever (3).

4. A motor vehicle roof carrier according to claim 3, characterized in that the carrying part (1) is a hollow section, which is formed with its top with a slot which is adapted to slidably receive the housing in positive engagement therewith, and the housing is adapted to be clamped in position in said hollow section by a claimp screw (21).

5. A motor vehicle roof rack according to claim 1 to 4, characterized in that the housing (2) which accommodates the detent lever (3) is connected at its bottom (18) by a connecting member (26) to a bearing bracket (27) for the closing part, and the connecting member (26) and the bearing bracket (27) just as the housing (2) are positively held in the carrying part (1) after they have been slidably inserted.

6. A motor vehicle roof rack according to claim 1 to 5, characterized in that the adjacent to the opening (12) for receiving the detent hook (3) the closing part (10, 11) consists of a shell-like cap (11), which in the closed position extends over at least part of the housing (2), which accommodates the detent lever (3).

7. A motor vehicle roof rack according to claim 1 to 6, characterized in that the shell-like cap (11) carries a lock (15), which is disposed at the end of the closing part (10, 11) and comprises a bolt (16) for locking the detent lever (3) against a pivotal movement in the closed position.

## Revendications

1. Galerie pour véhicule automobile comprenant une partie portante (1) pour recevoir la marchandise à transporter, telle que skis et une partie fermante (10, 11) pivotante recouvrant sur la marchandise à transporter, qui en son extrémité libre est adaptée pour être encliquetée, de manière à pouvoir être de nouveau dégagée, dans un mécanisme d'encliquetage comprenant un cliquet sur lequel agit un ressort (5) et qui consiste en un levier d'encliquetage pivoté (3) et est adapté pour être bloqué en position encliquetée par un verrou (15) caractérisée par le fait que le levier d'encliquetage (3) est monté de manière mobile sur la partie portante (1) et comporte un crochet d'encliquetage (7) qui dans la position fermée traverse une ouverture (12) de la partie fermante (10, 11) et est adapté pour être croché dans cette dernière, le crochet d'encliquetage (7) étant formé sur une tête épaissie du levier d'encliquetage et que ladite tête traverse l'ouverture (12) dans la position fermée et sert à actionner le levier d'encliquetage (3) par pression lorsque la partie fermante (10, 11) doit s'ouvrir.

2. Galerie pour véhicule automobile selon la revendication 1, caractérisée par le fait que la surface d'engagement (8) du crochet d'encliquetage (7) a une courbure plus forte que le plan de mouvement de la surface d'engagement (8) autour de l'axe pivotant (4) du levier d'encliquetage (3) ou qu'au cas où la surface d'engagement (8) est plane cette dernière comprenne un angle inférieur à 90° par rapport à la ligne qui relie le point de contact (14) entre la surface d'engagement (8) avec la partie fermante (10, 11) et l'axe pivotant (4) du levier d'encliquetage (3).

3. Galerie pour véhicule automobile selon les revendications 1 ou 2, caractérisée en ce que le levier d'encliquetage (3) est pivoté dans un boîtier (2) qui est monté sur la partie portante (1), dont la tête (9) du levier d'encliquetage dépasse du boîtier, et que le boîtier (2) comprend le ressort (5) qui agit sur le levier d'encliquetage (3).

4. Galerie pour véhicule automobile selon la revendication 3, caractérisée par le fait que la partie portante (1) est un profil creux qui en sa partie supérieure comprend une échancrure dans laquelle le boîtier s'engage parfaitement et peut être bloqué au moyen d'une vis de serrage (21).

5. Galerie pour véhicule automobile selon l'une des revendications 1 à 4, caractérisée par le fait que le boîtier (2) dans lequel est logé le levier d'encliquetage (3) est relié par le fond (18) au moyen d'une pièce de raccordement (26) avec un sabot d'appui (27) pour la partie fermante et que la pièce de raccordement (26) et le sabot d'appui (27) tout comme le boîtier (2) sont tenus positivement dans la partie fermante (1) après y avoir été engagés.

6. Galerie pour véhicule automobile selon les revendications 1 à 5, caractérisée par le fait qu'à proximité de l'ouverture (12) pour recevoir le crochet d'encliquetage (3) la partie fermante (10, 11) consiste en un capuchon en forme de calotte (11) qui dans la position fermée s'engage au moins partiellement dans le boîtier (2) qui comporte le levier d'encliquetage (3).

7. Galerie pour véhicule automobile selon l'un des revendications 1 à 6, caractérisée par le fait que le capuchon (11) courbé à la manière d'une calotte porte un crochet (15) qui est disposé à l'extrémité de la partie fermante (10, 11) et comprend un verrou (16) pour bloquer le levier d'encliquetage (3) contre le mouvement pivotant dans la position fermée.

Fig.1

Fig.2